(19) Europäisches Patentamt
European Patent Office
Office européen des brevets

(11) EP 2 427 669 B1

(12) EUROPÄISCHE PATENTSCHRIFT

(45) Veröffentlichungstag und Bekanntmachung des Hinweises auf die Patenterteilung:
**19.06.2013 Patentblatt 2013/25**

(51) Int Cl.:
***F16D 65/14*** *(2006.01)*

(21) Anmeldenummer: **10717063.1**

(22) Anmeldetag: **28.04.2010**

(86) Internationale Anmeldenummer:
**PCT/EP2010/002593**

(87) Internationale Veröffentlichungsnummer:
**WO 2010/127791 (11.11.2010 Gazette 2010/45)**

(54) **FESTSTELLBREMSEINRICHTUNG EINES SCHIENENFAHRZEUGS MIT HOHEM WIRKUNGSGRAD**

PARKING BRAKE DEVICE OF A RAILWAY VEHICLE HAVING HIGH EFFICIENCY

FREIN DE STATIONNEMENT D'UN VÉHICULE SUR RAILS AYANT UN RENDEMENT ÉLEVÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.05.2009 DE 102009020548**

(43) Veröffentlichungstag der Anmeldung:
**14.03.2012 Patentblatt 2012/11**

(73) Patentinhaber: **KNORR-BREMSE Systeme für Schienenfahrzeuge GmbH 80909 München (DE)**

(72) Erfinder:
• **EBNER, Christian 86161 Augsburg (DE)**
• **MATHIEU, Michael 82178 Puchheim (DE)**
• **FUDERER, Erich 82256 Fürstenfeldbruck (DE)**
• **KRAUS, Harry-Werner 81825 München (DE)**

(74) Vertreter: **Mattusch, Gundula C/o Knorr-Bremse AG Moosacherstrasse 80 80809 München (DE)**

(56) Entgegenhaltungen:
**EP-A2- 0 674 116      DE-A1-102005 058 209
DE-B3- 10 242 397**

EP 2 427 669 B1

**Beschreibung**

Stand der Technik

Die vorliegende Erfindung betrifft eine Bremseinrichtung eines Schienenfahrzeugs beinhaltend wenigstens einen Betriebsbremszylinder mit wenigstens einem druckmittelbetätigten Betriebsbremskolben, welcher eine mit einer Bremszylinderachse koaxiale Betriebsbremskolbenstange betätigt, sowie mit einer Feststellbremseinrichtung mit einem schwenkbar gelagerten Betätigungshebel, dessen Drehbewegung auf eine senkrecht zur Bremszylinderachse angeordnete, über wenigstens ein Wellenlager an einem Gehäuse drehbar gelagerte Welle übertragbar ist, wobei die über den Betätigungshebel eingeleitete Drehbewegung der Welle in eine parallel zur Bremszylinderachse gerichtete Linearbewegung wenigstens einer über ein Stützrollenlager an einer parallel zur Welle angeordneten Drehachse drehbar gelagerten Stützrolle dadurch wandelbar ist, dass wenigstens ein mit der Welle drehfest verbundener Nocken mit einer Nockenwirkfläche vorgesehen ist, welche während eines Zuspann- oder Lösehubs der Feststellbremseinrichtung mit einer radial äußeren Stützrollenfläche der Stützrolle zusammenwirkt, wobei die Linearbewegung der Stützrolle auf die Betriebsbremskolbenstange übertragen wird, nach dem Oberbegriff von Anspruch 1.

Eine gattungsgemäße Bremseinrichtung ist aus der EP 0 674 116 B1 bekannt. Sie ist mit einer Feststellbremseinrichtung versehen, umfassend eine symmetrische Nockenbetätigung, wobei an einer Welle angeordnete Nocken mit Evolventenkontur zu beiden Seiten eines Kolbenstangenrohres mit Rollen in Eingriff stehen, welche am Kolbenstangenrohr um eine gemeinsame Drehachse drehbar gelagert sind. Da eine solche Feststellbremseinrichtung wegen des vergleichsweise hohen Gewichts von Schienenfahrzeugen große Feststellbremskräfte aufbringen muss, ist ein hoher Wirkungsgrad der Feststellbremseinrichtung mit möglichst geringen Reibkräften erwünscht.

Es ist daher Aufgabe der vorliegenden Erfindung, eine Bremseinrichtung der eingangs erwähnten Art derart weiterzubilden, dass er einen möglichst hohen Wirkungsgrad aufweist.

Diese Aufgabe wird durch die Merkmale von Anspruch 1 gelöst.

Offenbarung der Erfindung

Die Erfindung schlägt vor, dass die Nockenwirkfläche als Umfangsabschnitt einer Zylinderfläche ausgebildet ist, deren Mittelachse während eines Zuspann-oder Lösehubs der Feststellbremseinrichtung eine kreisförmige Bewegungsbahn um die Wellenachse der Welle ausführt, wobei ein Schnittpunkt dieser Bewegungsbahn mit der Bremszylinderachse existiert, welcher im wesentlichen einer maximalen Feststellbremskraft zugeordnet ist.

Während eines Zuspann- oder Lösehubs der Feststellbremseinrichtung tritt aufgrund der geometrischen Verhältnisse, insbesondere zwischen der Nockenwirkfläche und der äußeren Stützrollenfläche ein Verlauf der Feststellbremskraft auf, welcher in einem bestimmten Punkt oder in einem bestimmten Bereich maximal ist. Wenn an diesem Punkt oder in diesem Bereich maximaler Feststellbremskraft kein Hebelarm zwischen der oben genannten Bewegungsbahn und der Bremszylinderachse bzw. und der hierzu koaxialen Betriebsbremskolbenstange vorhanden ist, so werden in die die Bremszuspannkräfte übertragende Betriebsbremskolbenstange keine Querkräfte eingeleitet, was geringe Reibkräfte und folglich einen hohen Wirkungsgrad der Feststellbremseinrichtung zur Folge hat. Denn gerade in dem Bereich des Zuspann- oder Lösehubs der Feststellbremseinrichtung, in welchem die maximale Feststellbremskraft auftritt, sind die auf Querkräften basierenden Reibkräfte ebenfalls maximal.

Unter dem "Zuspannhub" im Sinne der Erfindung soll der Weg bzw. der Winkel verstanden werden, den Komponenten der Feststellbremseinrichtung ausgehend von einer gelösten Bremsgrundstellung, in welcher die Bremsbeläge durch das Lüftspiel von einem Reibpartner wie einer Bremsscheibe beabstandet sind, bis zu einer Zuspannstellung zurücklegen, in welcher die Feststellbremskraft maximal ist.

Entsprechend soll unter dem "Lösehub" im Sinne der Erfindung der Weg bzw. der Winkel verstanden werden, den Komponenten der Feststellbremseinrichtung ausgehend von der Zuspannstellung, in welcher die Feststellbremskraft maximal ist bis zur gelösten Bremsgrundstellung zurücklegen, in welcher die Bremsbeläge durch das Lüftspiel von einem Reibpartner wie einer Bremsscheibe beabstandet sind.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt sind die Welle und die wenigstens eine Stützrolle derart angeordnet, dass bezogen auf den gesamten Zuspannhub zu Beginn des Zuspannhubs der Abstand zwischen einer sich zwischen einer Berührungslinie zwischen der Nockenwirkfläche und der Stützrollenfläche einerseits und der Stützrollenachse andererseits erstreckenden Kraftwirkungslinie und der Wellenachse einen Maximalwert einnimmt. Je größer dieser Abstand zwischen der Kraftwirkungslinie und der Wellenachse ist, desto kleiner ist das Übersetzungsverhältnis, welches das sich durch das Zusammenwirken von Nockenwirkfläche und Stützrollenfläche ergebende Kurvengetriebe aufweist.

Mit anderen Worten ist dann das Übersetzungsverhältnis zu Beginn des Zuspannhubs am kleinsten, wenn lediglich das Lüftspiel zwischen den Bremsbelägen und dem zugeordneten Reibpartner überwunden werden muss. Das Übersetzungsverhältnis steigt dann mit zunehmendem Zuspannhub an, weil sich der Abstand zwischen der Kraftwirkungslinie und der Wellenachse verringert. Diese Charakteristik hat den Vorteil, dass dann die Kraftübersetzung des durch die Nockenwirkfläche und der Stützrollenfläche gebildeten Kurvengetriebes mit steigendem Zuspannhub größer wird und somit Anforderungen am besten gerecht wird, wonach zu Beginn des Zuspannhubs mit einer geringen Zuspannkraft lediglich das Lüftspiel überwunden werden muss und gegen Ende des Zuspannhubs eine hohe Zuspannkraft gefordert ist, um eine maximale Feststellbremskraft zu erzielen.

Gemäß einer Weiterbildung sind zwei symmetrisch zur Zylinderachse angeordnete, mit der Welle drehfest verbundene Nocken sowie zwei mit den Nocken zusammen wirkende und symmetrisch zur Zylinderachse angeordnete Stützrollen vorgesehen sind. Weiterhin sind wenigstens zwei symmetrisch zur Zylinderachse angeordnete Wellenlager vorgesehen, wobei in Richtung senkrecht zur Bremszylinderachse gesehen die Wellenlager und die Stützrollenlager zueinander versetzt angeordnet sind.

Vor dem Hintergrund, dass die Wellenlager und die Stützrollenlager jeweils eine gewissen radialen Bauraum einnehmen, hat dies den Vorteil, dass dann die die Wellenlager und die Stützrollenlager in unterschiedlichen Ebenen liegen und somit gegenüber einer Lösung, in welcher sie in einer gemeinsamen Ebene liegen, die Wellenachse und die Stützrollenachse einen geringeren Abstand zueinander einnehmen können, was eine vorteilhaft geringe Baugröße der Bremseinrichtung mit sich bringt. Dies ist vor allem im Hinblick auf den begrenzten Bauraum von Bremseinrichtungen im Bereich von Schienenfahrzeugdrehgestellen vorteilhaft. Beispielsweise ist der Abstand der Wellenlager von der Bremszylinderachse größer ist als der Abstand der Stützrollenlager von der Bremszylinderachse.

Bevorzugt ist weiterhin die wenigstens eine Stützrolle über einen Lagerzapfen an einem auf der Betriebsbremskolbenstange koaxial zur Bremszylinderachse verschieblich gelagerten Druckring drehbar gelagert, wobei die Linearbewegung des Druckrings auf die Betriebsbremskolbenstange übertragen wird. Insbesondere wird die Linearbewegung des Druckrings über einen axialen Anschlag auf die Betriebsbremskolbenstange übertragen, welche einen Bremsmechanismus wie beispielsweise eine Bremszangeneinheit betätigt.

Die Welle verformt sich unter Last elastisch, wodurch die Nocken einen Winkelversatz erfahren, welcher zu einer ungleichen Belastung der Stützrollen führen würde. Besonders bevorzugt ist deshalb der Druckring auf der Betriebsbremskolbenstange koaxial zur Bremszylinderachse verschieblich gelagert und der Anschlag als in Richtung der Bremszylinderachse gesehen konvex ballig ausgebildete Anschlagfläche ausgebildet, welche mit einer senkrecht zur Bremszylinderachse angeordneten Ringfläche zusammen wirkt, wobei die konvex ballig ausgebildete Anschlagfläche und die senkrecht zur Bremszylinderachse angeordnete Ringfläche jeweils entweder am Druckring oder an der Betriebsbremskolbenstange ausgebildet sind. Dadurch kann der Winkelversatz der Nocken ausgeglichen werden, indem dann der auf der Betriebsbremskolbenstange beispielsweise spielbehaftet axial gelagerte Druckring in Bezug zur Betriebsbremskolbenstange bzw. zur Bremszylinderachse verkippen kann. Die Berührung zwischen der Ringfläche und der konvex ballig ausgebildeten Anschlagfläche erfolgt dann beispielsweise im wesentlichen entlang wenigstens einer Linie, welche dann eine Kipplagerung für den Druckring bildet.

Gemäß einer Weiterbildung ist das wenigstens eine Wellenlager tragende Gehäuse als Zylinderdeckel ausgebildet, der eine Federkammer des Betriebsbremszylinders axial verschließt, in welcher eine sich einerseits am Zylinderdeckel und andererseits am Betriebsbremskolben abstützende Rückholfeder aufgenommen ist. Damit ist der Zylinderdeckel bifunktional, indem er einerseits in vom Bremszylinder abgehobenen Zustand eine Montage von Komponenten wie Betriebsbremskolben, Rückholfeder etc. innerhalb des Bremszylinder ermöglicht und andererseits wenigstens die Welle der Feststellbremseinrichtung drehlagert.

Dabei ist das wenigstens eine Wellenlager beispielsweise in einem von außen in eine Durchgangsöffnung des Zylinderdeckels einsetzbaren Lagerdeckel ausgebildet. Weiterhin kann an dem Zylinderdeckel auch ein Lager für einen den Betätigungshebel betätigenden Bowdenzug ausgebildet sein.

Genaueres wird im Rahmen der folgenden Beschreibung eines Ausführungsbeispiels der Erfindung deutlich.

Zeichnung

Ausführungsbeispiele der Erfindung sind in der Zeichnung dargestellt und in der nachfolgenden Beschreibung näher erläutert. In der Zeichnung zeigt

Fig.1    eine Seitenansicht eines kombinierten Betriebs- und Feststellbremszylinders einer Bremseinrichtung eines Schienenfahrzeugs gemäß einer bevorzugten Ausführungsform der Erfindung;

Fig.2    eine Explosionszeichnung eines Zylinderdeckels des kombinierten Betriebs- und Feststellbremszylinders von Fig.1 mit Komponenten der Feststellbremseinrichtung;

Fig.3    eine vertikale Längsquerschnittsdarstellung des kombinierten Betriebs- und Feststellbremszylinders von Fig.1 mit der Feststellbremse in Lösestellung;

Fig.4     eine vertikale Längsquerschnittsdarstellung des kombinierten Betriebs- und Feststellbremszylinders von Fig.1 mit der Feststellbremse in Zuspannstellung;

Fig.5     eine horizontale Längsquerschnittsdarstellung des kombinierten Betriebsbrems- und Feststellbremszylinders von Fig.1;

Fig.6     eine vertikale Längsquerschnittsdarstellung eines kombinierten Betriebs- und Feststellbremszylinders gemäß einer weiteren Ausführungsform.

Beschreibung der Ausführungsbeispiele

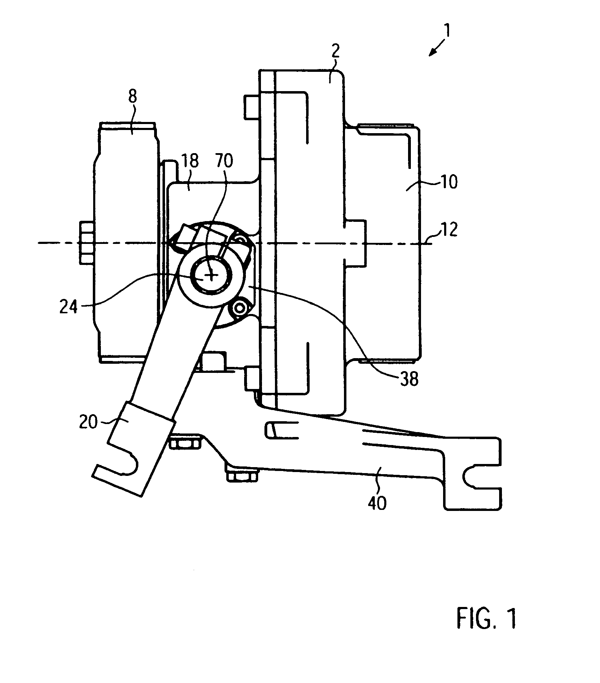

Der in Fig.1 gezeigte kombinierte Betriebs- und Feststellbremszylinder 1 ist Teil einer Bremseinrichtung eines Schienenfahrzeugs und betätigt beispielsweise eine hier nicht gezeigte Bremszange mit zwei hier nicht sichtbaren, im wesentlichen parallel zueinander verlaufende Bremszangenhebeln. Die beiden Bremszangenhebel tragen an ihren einen Enden vermittels Bolzen angelenkte Bremsbacken, welche vorzugsweise in eine Bremsscheibe reibschlüssig eingreifen können.

Zwischen den anderen Enden der Bremszangenhebel befindet sich der kombinierte Betriebs- und Feststellbremszylinder 1, dessen Gehäuse 2 in Fig.1 rechtsseitig an dem einen Bremszangenhebel und dessen Betriebsbremskolben 4 über eine Betriebsbremskolbenstange 6 und ein Spindeljoch 8 mit dem anderen Bremszangenhebel verbunden ist.

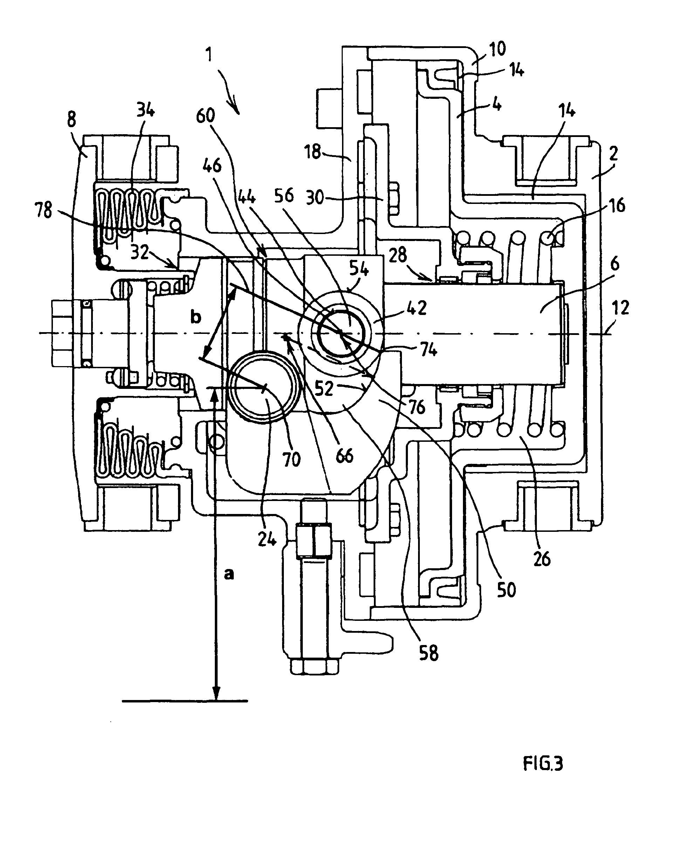

Genauer dient der Betriebsbremszylinder 10 des kombinierten Betriebs- und Feststellbremszylinders 1 als aktive Betriebsbremse und beinhaltet den druckmittelbetätigten Betriebsbremskolben 4, welcher über die mit einer Bremszylinderachse 12 koaxiale Betriebsbremskolbenstange 6 und das Spindeljoch 8 den Bremszangenhebel betätigt, wobei die Druckbeaufschlagung bzw. Druckentlastung des Betriebsbremskolbens 4 durch Be- bzw. Entlüften einer Betriebsbremskammer 14 innerhalb des Betriebsbremszylinders 10 erfolgt (Fig.3 bis Fig.5). Eine Rückholfeder 16 als Druckfeder spannt den Betriebsbremskolben 4 in die in Fig.3 gezeigte, dort rechtsseitige Lösestellung vor.

Ein Zylinderdeckel 18 verschließt den kombinierten Betriebs- und Feststellbremszylinder 1 axial an dem Ende, an welchem die Betriebsbremskolbenstange aus ihm austritt und wo diese endseitig mit dem Spindeljoch 8 verbunden ist. Eine Manschettendichtung 34 in Form eines Faltenbalgs zwischen dem Zylinderdeckel 18 und dem Spindeljoch 8 dichtet die Durchgangsöffnung 32 nach außen hin ab.

Die Betriebsbremskolbenstange 6 ist in einer Durchgangsöffnung 28 einer Trennwand 30 geführt, welche eine Federkammer 26 von einem Innenraum des Zylinderdeckels 18 trennt. In der Federkammer 26 ist die Rückholfeder 16 aufgenommen, welche sich einerseits an der Trennwand 30 und andererseits am Betriebsbremskolben 4 abstützt.

Die Feststellbremseinrichtung ist in den kombinierten Betriebsbrems- und Feststellbremszylinder 1 integriert bzw. an diesem ausgebildet. Bevorzugt sind in einem Innenraum des Zylinderdeckels 18 bzw. an dem Zylinderdeckel 18 des kombinierten Betriebsbrems- und Feststellbremszylinders 1 die Komponenten der Feststellbremseinrichtung gelagert bzw. aufgenommen. Im einzelnen weist die Feststellbremseinrichtung einen an dem endseitigen Zylinderdeckel 18 schwenkbar gelagerten Betätigungshebel 20 auf, dessen Drehbewegung auf eine senkrecht zur Bremszylinderachse 12 angeordnete, über am Zylinderdeckel 18 aufgenommene Wellenlager 22 drehbar gelagerte Welle 24 übertragen wird.

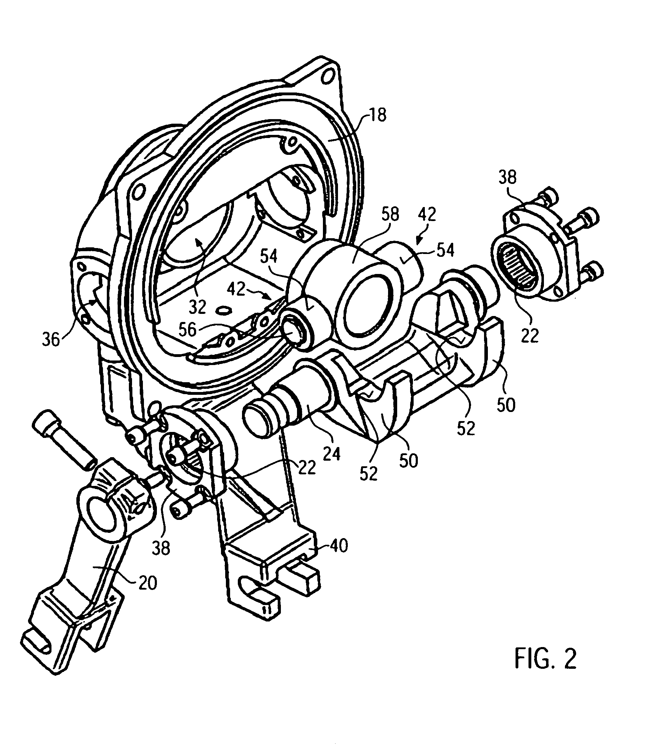

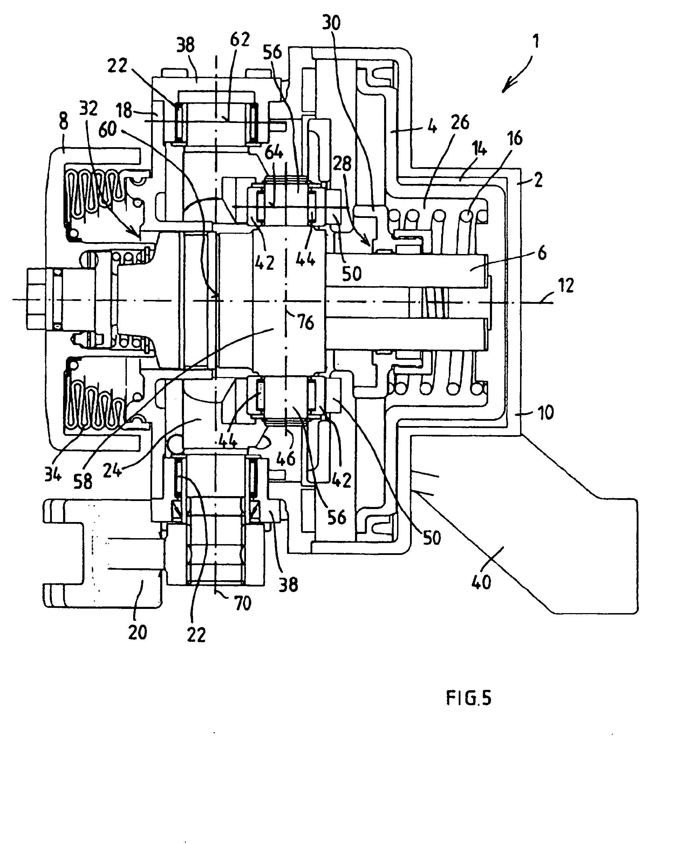

Vorzugsweise sind zwei Wellenlager 22 symmetrisch und senkrecht zur Bremszylinderachse 12 angeordnet und beispielsweise in von außen in Durchgangsöffnungen 36 des Zylinderdeckels 18 einsetzbaren Lagerdeckeln 38 ausgebildet, wie aus Fig.2 und Fig.5 hervorgeht. Weiterhin ist an dem Zylinderdeckel 18 auch ein Widerlager für einen den Betätigungshebel 20 betätigenden, hier nicht gezeigten Bowdenzug in Form einer Haltegabel 40 befestigt, wie Fig. 1 und Fig.5 zeigen.

Die über den Bowdenzug eingeleitete Drehbewegung des Betätigungshebels 20 und damit auch der mit ihm drehfest verbundenen Welle 24 wird dann über ein Kurvengetriebe in eine parallel zur Bremszylinderachse 12 gerichtete Linearbewegung von Stützrollen 42 gewandelt. Die Stützrollen 42 sind über Stützrollenlager 44 an einer parallel zur Welle 24 angeordneten Drehachse 46 drehbar gelagert. Weiterhin sind mit der Welle 24 drehfest verbundene Nocken 50 mit Nockenwirkflächen 52 vorgesehen, welche während eines Zuspann- oder Lösehubs der Feststellbremseinrichtung mit radial äußeren Stützrollenflächen 54 der Stützrollen 42 zusammenwirken, wobei die Linearbewegung der Stützrollen 42 auf die Betriebsbremskolbenstange 6 übertragen wird. Das Kurvengetriebe, welches die über den Betätigungshebel 20 eingeleitete Drehbewegung der Welle 24 in eine Linearbewegung der Betriebsbremskolbenstange 4 wandelt, wird nun im folgenden beschrieben.

Im einzelnen sind zwei symmetrisch zur Bremszylinderachse 12 angeordnete, mit der Welle 24 drehfest verbundene Nocken 50 sowie zwei mit den Nocken zusammen wirkende und ebenfalls symmetrisch zur Bremszylinderachse 12 angeordnete Stützrollen 42 vorgesehen. Die Stützrollen 42 sind an mit der Drehachse 46 koaxialen Lagerzapfen 56 drehbar gelagert, die von einem Druckring 58 senkrecht wegragen und wiederum senkrecht zur Bremszylinderachse 12 ausgerichtet sind.

Der Druckring 58 ist auf der Betriebsbremskolbenstange 6 koaxial zur Bremszylinderachse 12 verschieblich gelagert, wobei die Linearbewegung des Druckrings 58 über einen axialen Anschlag 60 auf die Betriebsbremskolbenstange 6 übertragbar ist, welche dann das Spindeljoch 8 betätigt, in Fig.3 bis Fig.5 zum Zuspannen nach links und zum Lösen nach rechts. Gemäß der Ausführungsform von Fig.3 bis Fig.5 ist der Anschlag 60 des Druckrings 58 beispielsweise als ebene, senkrecht zur Bremszylinderachse 12 angeordnete Ringfläche ausgebildet, welche zur axialen Kraftübertragung mit einer komplementären, ebenfalls senkrecht zur Bremszylinderachse 12 angeordneten ebenen Ringfläche der Betriebsbremskolbenstange 6 zusammen wirkt.

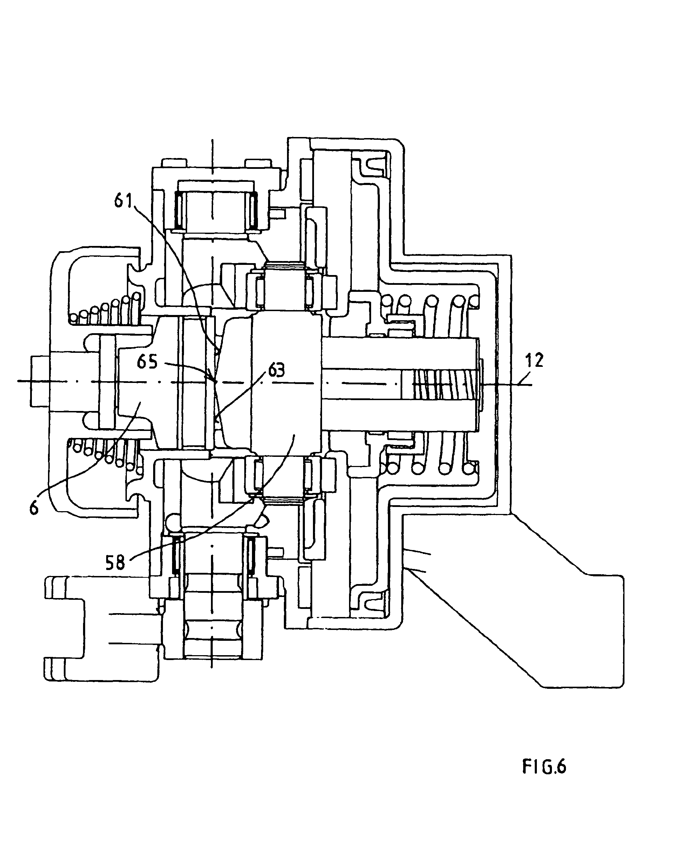

Die Welle 24 verformt sich unter Last elastisch, wodurch die Nocken 50 einen Winkelversatz erfahren, welcher zu einer ungleichen Belastung der Stützrollen 42 führt. Durch Ausbildung des Anschlags 60 des Druckrings 58 als in Richtung der Bremszylinderachse 12 gesehen konvex ballig ausgebildete Anschlagfläche 61, welche mit einer beispielsweise ebenen und senkrecht zur Bremszylinderachse 12 angeordneten Ringfläche 63 der Betriebsbremskolbenstange 6 zusammen wirkt, kann der Winkelversatz der Nocken 50 ausgeglichen werden, indem dann der auf der Betriebsbremskolbenstange 6 spielbehaftet axial gelagerte Druckring 58 in Bezug zur Betriebsbremskolbenstange 6 bzw. zur Bremszylinderachse 12 verkippen kann, wie in Fig.6 gezeigt ist. Die Berührung zwischen der Ringfläche 63 und der konvex ballig ausgebildeten Anschlagfläche 61 erfolgt dann im wesentlichen entlang wenigstens einer Linie 65, welche dann eine Kipplagerung für den Druckring 58 bildet.

Vom Spindeljoch 8 wird dann die Zuspannbewegung auf den entsprechenden Bremszangenhebel übertragen, um eine Zuspannbewegung der Bremszange hervorzurufen, bei welcher die Bremsbacken in reibschlüssigen Eingriff mit der Bremsscheibe geraten, wodurch die Feststellbremse zugespannt ist.

In Richtung senkrecht zur Bremszylinderachse 12 gesehen sind die Wellenlager 22 und die Stützrollenlager 44 zueinander versetzt angeordnet, wie insbesondere aus Fig.5 hervorgeht. Die Wellenlager 22 und die Stützrollenlager 44 sind bevorzugt als Wälzlager, insbesondere als Rollenlager ausgebildet. Insbesondere sind die Wellenlager 22 und die Stützrollenlager 44 in unterschiedlichen Ebenen 62, 64 angeordnet, wobei Flächennormalen auf diese Ebenen 62, 64 senkrecht zur Bremszylinderachse 12 angeordnet sind und eine solche Ebene 62, 64 im wesentlichen eine Symmetrieebene bezüglich der Rollen bildet, zu welchen sie senkrecht angeordnet ist. Insbesondere ist der Abstand der Ebene 62 der Wellenlager 22 von der Bremszylinderachse 12 größer als der Abstand der Ebene 64 der Stützrollenlager 44 von der Bremszylinderachse 12.

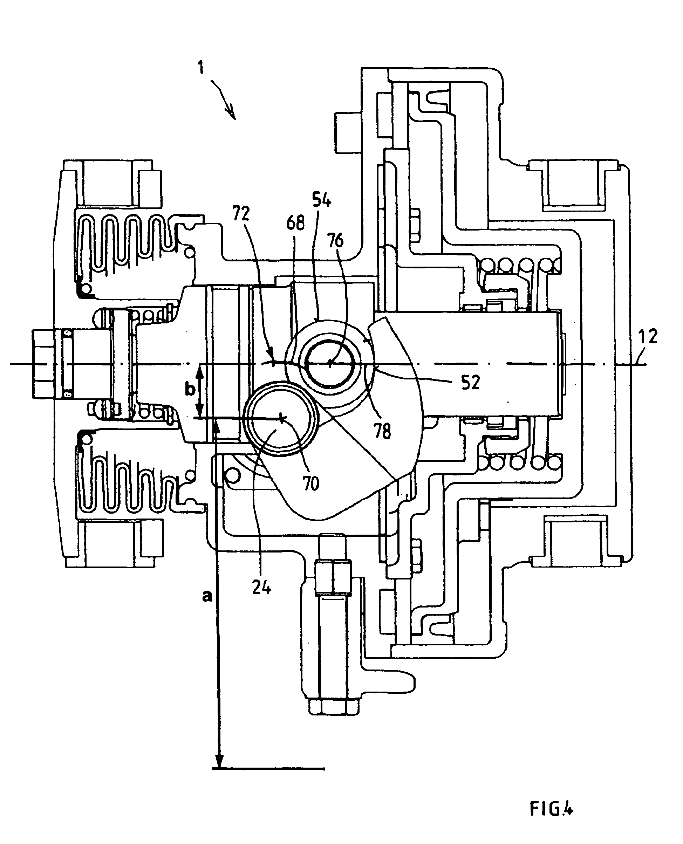

Die mit den radial äußeren Stützrollenflächen 54 der Stützrollen 42 zusammen wirkenden Nockenwirkflächen 52 der Nocken 50 sind jeweils als Umfangsabschnitt einer Zylinderfläche ausgebildet, wie insbesondere Fig.3 und Fig. 4 zeigen. Unter einem Umfangsabschnitt einer Zylinderfläche 52 soll hier ein sich über einen bestimmten Winkel erstreckendes Bogenstück eines gedachten, vollständigen Zylinders verstanden werden.

Die Mittelachse 66 dieses gedachten Zylinders, wie sie in Fig.3 zu sehen ist, führt während eines Zuspannoder Lösehubs der Feststellbremseinrichtung eine kreisförmige Bewegungsbahn 68 um die Wellenachse 70 der Welle 24 aus. Die Nockenwirkflächen 52 der Nocken 50 und die Stützrollen 42 sind dabei derart ausgebildet bzw. angeordnet, dass ein Schnittpunkt 72 dieser Bewegungsbahn 68 mit der Bremszylinderachse 12 existiert, welcher im wesentlichen einer maximalen Feststellbremskraft zugeordnet ist. Diesen Sachverhalt veranschaulicht am besten Fig.4.

Besonders bevorzugt sind die Welle 24 und die Stützrollen 42 derart angeordnet, dass bezogen auf den gesamten Zuspannhub der Feststellbremseinrichtung von der in Fig.3 gezeigten Lösestellung bis zur in Fig.4 gezeigten Zuspannstellung zu Beginn des Zuspannhubs (Fig.3) der Abstand b zwischen einer sich zwischen einer Berührungslinie 74 zwischen der Nockenwirkfläche 52 und der Stützrollenfläche 54 einerseits und der Stützrollenachse 76 andererseits erstreckenden Kraftwirkungslinie 78 und der Wellenachse 70 einen Maximalwert einnimmt. Je größer dieser Abstand b zwischen der Kraftwirkungslinie 78 und der Wellenachse 70 ist, desto kleiner ist das Übersetzungsverhältnis i, welches das sich durch das Zusammenwirken von Nockenwirkfläche 52 und Stützrollenfläche 54 ergebende Kurvengetriebe aufweist.

Im zugespannten Zustand gemäß Fig.4 ist die Kraftwirkungslinie 78 koaxial zur Bremszylinderachse 12, wobei die Kraftwirkungslinie 78 die Richtung der zwischen der Nockenwirkfläche 52 und der Stützrollenfläche 54 wirkenden Kraft kennzeichnet, wie sie auch oben beschrieben wurde.

Der in Fig.3 und Fig.4 gekennzeichnete Abstand a entspricht dem wirksamen Hebelarm zwischen dem Anlenkpunkt des Bowdenzugs am Betätigungshebel 20 und der Wellenachse 70, wenn in den Betätigungshebel 20 über den Bowdenzug die Betätigungskraft eingeleitet wird.

Das Übersetzungsverhältnis i des Kurvengetriebes ergibt sich dann aus den jeweiligen Abständen bzw. Hebelarmen a und b (Fig.3 und Fig.4):

$$i = \frac{a}{b}$$

Dabei zeigt Fig.3 die Feststellbremseinrichtung in Lösestellung, in welcher die radial äußere Stützrollenfläche 54 oder Umfangsfläche der Stützrollen 42 in Eingriff mit dem von der Welle 24 abgewandten Rand der Nockenwirkfläche 52 steht. Der Hebelarm b ist dann maximal. Demgegenüber zeigt Fig.4 die Feststellbremseinrichtung in Zuspannstellung, in welcher der Hebelarm b minimal ist.

Mit anderen Worten ist das Übersetzungsverhältnis i zu Beginn des Zuspannhubs oder in der Lösestellung am kleinsten, wenn lediglich das Lüftspiel zwischen den Bremsbelägen und dem zugeordneten Reibpartner überwunden werden muss und der Hebelarm b maximal ist. Das Übersetzungsverhältnis i steigt dann mit zunehmendem Zuspannhub an, unter anderem weil sich der Hebelarm bzw. Abstand b zwischen der Kraftwirkungslinie 78 und der Wellenachse 70 verringert. Daher wird die Kraftübersetzung des durch die Nocken 50 und die Stützrollen 42 gebildeten Kurvengetriebes mit steigendem Zuspannhub größer. Demzufolge ergibt sich eine relativ geringe Zuspannkraft zu Beginn des Zuspannhubs, wo lediglich das Lüftspiel überwunden werden muss und eine hohe Zuspannkraft gegen Ende des Zuspannhubs, wo die maximale Feststellbremskraft wirken soll.

Bezugszahlenliste

| | |
|---|---|
| 1 | kombinierter Betriebs- und Feststellbremszylinder |
| 2 | Gehäuse |
| 4 | Betriebsbremskolben |
| 6 | Betriebsbremskolbenstange |
| 8 | Spindeljoch |
| 10 | Betriebsbremszylinder |
| 12 | Bremszylinderachse |
| 14 | Betriebsbremskammer |
| 16 | Rückholfeder |
| 18 | Zylinderdeckel |
| 20 | Betätigungshebel |
| 22 | Wellenlager |
| 24 | Welle |
| 26 | Federkammer |
| 28 | Durchgangsöffnung |
| 30 | Trennwand |
| 32 | Durchgangsöffnung |
| 34 | Manschettendichtung |
| 36 | Durchgangsöffnungen |
| 38 | Lagerdeckel |
| 40 | Haltegabel |
| 42 | Stützrollen |
| 44 | Stützrollenlager |
| 46 | Drehachse |
| 50 | Nocken |
| 52 | Nockenwirkflächen |
| 54 | Stützrollenflächen |
| 56 | Lagerzapfen |
| 58 | Druckring |
| 60 | Anschlag |
| 61 | Anschlagfläche |
| 62 | Ebene |
| 63 | Ringfläche |
| 64 | Ebene |
| 65 | Linie |
| 66 | Mittelachse |
| 68 | Bewegungsbahn |
| 70 | Wellenachse |

(fortgesetzt)

| 72 | Schnittpunkt |
| 74 | Berührungslinie |
| 76 | Stützrollenachse |
| 78 | Kraftwirkungslinie |

**Patentansprüche**

1. Bremseinrichtung eines Schienenfahrzeugs beinhaltend wenigstens einen Betriebsbremszylinder (10) mit wenigstens einem druckmittelbetätigten Betriebsbremskolben (4), welcher eine mit einer Bremszylinderachse (12) koaxiale Betriebsbremskolbenstange (6) betätigt, sowie mit einer Feststellbremseinrichtung mit einem schwenkbar gelagerten Betätigungshebel (20), dessen Drehbewegung auf eine senkrecht zur Bremszylinderachse (12) angeordnete, über wenigstens ein Wellenlager (22) an einem Gehäuse (18) drehbar gelagerte Welle (24) übertragbar ist, wobei die über den Betätigungshebel (20) eingeleitete Drehbewegung der Welle (24) in eine parallel zur Bremszylinderachse (12) gerichtete Linearbewegung wenigstens einer über ein Stützrollenlager (44) an einer parallel zur Welle (24) angeordneten Drehachse (76) drehbar gelagerten Stützrolle (42) dadurch wandelbar ist, dass wenigstens ein mit der Welle (24) drehfest verbundener Nocken (50) mit einer Nockenwirkfläche (52) vorgesehen ist, welche während eines Zuspann- oder Lösehubs der Feststellbremseinrichtung mit einer radial äußeren Stützrollenfläche (54) der Stützrolle (42) zusammenwirkt, wobei die Linearbewegung der Stützrolle (42) auf die Betriebsbremskolbenstange (6) übertragen wird, **dadurch gekennzeichnet, dass** die Nockenwirkfläche (52) als Umfangsabschnitt einer Zylinderfläche ausgebildet ist, deren Mittelachse (66) während eines Zuspann- oder Lösehubs der Feststellbremseinrichtung eine kreisförmige Bewegungsbahn (68) um die Wellenachse (70) der Welle (24) ausführt, wobei ein Schnittpunkt (72) dieser Bewegungsbahn (68) mit der Bremszylinderachse (12) existiert, welcher im wesentlichen einer maximalen Feststellbremskraft zugeordnet ist.

2. Bremseinrichtung nach Anspruch 1, **dadurch gekennzeichnet, dass** die Welle (24) und die wenigstens eine Stützrolle (42) derart angeordnet sind, dass bezogen auf den gesamten Zuspannhub zu Beginn des Zuspannhubs der Abstand (b) zwischen einer sich zwischen einer Berührungslinie (74) zwischen der Nockenwirkfläche (52) und der Stützrollenfläche (54) einerseits und der Stützrollenachse (76) andererseits erstreckenden Kraftwirkungslinie (78) und der Wellenachse (70) einen Maximalwert einnimmt.

3. Bremseinrichtung nach einem der vorhergehenden Ansprüche, **dadurch gekennzeichnet, dass** zwei symmetrisch zur Bremszylinderachse (12) angeordnete, mit der Welle (24) drehfest verbundene Nocken (50) sowie zwei mit den Nocken (50) zusammen wirkende und symmetrisch zur Bremszylinderachse (12) angeordnete Stützrollen (42) vorgesehen sind.

4. Bremseinrichtung nach Anspruch 3, **dadurch gekennzeichnet, dass** wenigstens zwei symmetrisch zur Bremszylinderachse (12) angeordnete Wellenlager (22) vorgesehen sind und in Richtung senkrecht zur Bremszylinderachse gesehen die Wellenlager (22) und die Stützrollenlager (44) zueinander versetzt angeordnet sind.

5. Bremseinrichtung nach Anspruch 4, **dadurch gekennzeichnet, dass** der Abstand der Wellenlager (22) von der Bremszylinderachse (12) größer ist als der Abstand der Stützrollenlager (44) von der Bremszylinderachse (12).

6. Bremseinrichtung nach einem der vorhergehenden Ansprüche, **dadurch gekennzeichnet, dass** die wenigstens eine Stützrolle (42) über einen Lagerzapfen (56) an einem auf der Betriebsbremskolbenstange (6) koaxial zur Bremszylinderachse (12) verschieblich gelagerten Druckring (58) drehbar gelagert ist, wobei die Linearbewegung des Druckrings (58) über einen axialen Anschlag (60) auf die Betriebsbremskolbenstange (6) übertragen wird.

7. Bremseinrichtung nach Anspruch 6, **dadurch gekennzeichnet, dass** der Druckring (58) auf der Betriebsbremskolbenstange (6) koaxial zur Bremszylinderachse (12) verschieblich gelagert und der Anschlag (60) als in Richtung der Bremszylinderachse (12) gesehen konvex ballig ausgebildete Anschlagfläche (61) ausgebildet ist, welche mit einer senkrecht zur Bremszylinderachse (12) angeordneten Ringfläche (63) zusammen wirkt, wobei die konvex ballig ausgebildete Anschlagfläche (61) und die senkrecht zur Bremszylinderachse (12) angeordnete Ringfläche (63) jeweils entweder am Druckring (58) oder an der Betriebsbremskolbenstange (6) ausgebildet sind.

8. Bremseinrichtung nach einem der vorhergehenden Ansprüche, **dadurch gekennzeichnet, dass** die Betriebsbremskolbenstange (6) einen Bremsmechanismus betätigt.

9. Bremseinrichtung nach einem der vorhergehenden Ansprüche, **dadurch gekennzeichnet, dass** das das wenigstens eine Wellenlager (22) tragende Gehäuse (18) als Zylinderdeckel ausgebildet ist, der eine Federkammer (26) des Betriebsbremszylinders (10) axial verschließt, in welcher eine sich einerseits am Zylinderdeckel (18) andererseits am Betriebsbremskolben (4) abstützende Rückholfeder (16) aufgenommen ist.

10. Bremseinrichtung nach Anspruch 9, **dadurch gekennzeichnet, dass** an dem Zylinderdeckel (18) ein Lager (40) für einen den Betätigungshebel (20) betätigenden Bowdenzug ausgebildet ist.

11. Bremseinrichtung nach Anspruch 9 oder 10, **dadurch gekennzeichnet, dass** das wenigstens eine Wellenlager (22) in einem von außen in eine Durchgangsöffnung (36) des Zylinderdeckels (18) einsetzbaren Lagerdeckel (38) ausgebildet ist.

12. Bremseinrichtung nach einem der vorhergehenden Ansprüche, **dadurch gekennzeichnet, dass** das wenigstens eine Wellenlager (22) und das wenigstens eine Stützrollenlager (44) als Wälzlager ausgebildet sind.

13. Bremseinrichtung nach einem der vorhergehenden Ansprüche, **dadurch gekennzeichnet, dass** sie als Bremszangeneinheit einer Scheibenbremse eines Schienenfahrzeugs ausgebildet ist.

**Claims**

1. A brake device for a railway vehicle, comprising at least one service brake cylinder (10) having at least one service brake piston (4) actuated by a pressurized medium, said piston actuating a service brake piston rod (6) coaxial with a brake cylinder axis (12), and having a parking brake device with a pivotably mounted actuating lever (20), the rotary motion of which can be transmitted to a shaft (24) arranged perpendicularly to the brake cylinder axis (12) and rotatably mounted on a housing (18) by means of at least one shaft bearing (22), wherein the rotary motion of the shaft (24) induced by means of the actuating lever (20) can be converted to a linear motion, directed parallel to the brake cylinder axis (12), of at least one support roller (42) rotatably mounted, by means of a support roller bearing (44), on a rotational axis (76) arranged parallel to the shaft (24), by virtue of the fact that at least one cam (50) connected to the shaft (24) for conjoint rotation therewith and having an effective cam surface (52) is provided, said cam surface interacting with a radially outer support roller surface (54) of the support roller (42) during an application or release stroke of the parking brake device, wherein the linear motion of the support roller (42) is transmitted to the service brake piston rod (6), **characterized in that** the effective cam surface (52) is designed as a circumferential segment of a cylindrical surface, the center axis (66) of which follows a circular path of motion (68) about the shaft axis (70) of the shaft (24) during an application or release stroke of the parking brake device, wherein a point of intersection (72) of said path of motion (68) with the brake cylinder axis (12) exists that is associated substantially with a maximum parking brake force.

2. The brake device as claimed in claim 1, **characterized in that** the shaft (24) and the at least one support roller (42) are arranged in such a way that the distance (b) between a line of action of force (78) and the shaft axis (70), said line of action extending between a line of contact (74) between the effective cam surface (52) and the support roller surface (54), on the one hand, and the support roller axis (76), on the other hand, assumes a maximum value at the beginning of the application stroke, relative to the total application stroke.

3. The brake device as claimed in one of the preceding claims, **characterized in that** two cams (50), which are arranged symmetrically with respect to the brake cylinder axis (12) and connected to the shaft (24) for conjoint rotation therewith, and two support rollers (42), which interact with the cams (50) and are arranged symmetrically with respect to the brake cylinder axis (12), are provided.

4. The brake device as claimed in claim 3, **characterized in that** at least two shaft bearings (22) arranged symmetrically with respect to the brake cylinder axis (12) are provided, and the shaft bearings (22) and the support roller bearings (44) are arranged offset with respect to one another, when viewed in a direction perpendicular to the brake cylinder axis.

5. The brake device as claimed in claim 4, **characterized in that** the distance between the shaft bearings (22) and the brake cylinder axis (12) is greater than the distance between the support roller bearings (44) and the brake cylinder axis (12).

6. The brake device as claimed in one of the preceding claims, **characterized in that** the at least one support roller (42) is rotatably mounted by means of a bearing journal (56) on a pressure ring (58) mounted on the service brake piston rod (6) in such a way that it can be moved coaxially with respect to the brake cylinder axis (12), wherein the linear motion of the pressure ring (58) is transmitted via an axial stop (60) to the service brake piston rod (6).

7. The brake device as claimed in claim 6, **characterized in that** the pressure ring (58) is mounted on the service brake piston rod (6) in such a way that it can be moved coaxially with respect to the brake cylinder axis (12), and the stop (60) is designed as a stop surface (61) which is of convexly spherical design, when viewed in the direction of the brake cylinder axis (12), and interacts with an annular surface (63) arranged perpendicularly to the brake cylinder axis (12), wherein the stop surface (61) of convexly spherical design and the annular surface (63) arranged perpendicularly to the brake cylinder axis (12) are each formed either on the pressure ring (58) or on the service brake piston rod (6).

8. The brake device as claimed in one of the preceding claims, **characterized in that** the service brake piston rod (6) actuates a brake mechanism.

9. The brake device as claimed in one of the preceding claims, **characterized in that** the housing (18) supporting the at least one shaft bearing (22) is designed as a cylinder cover, which axially closes off a spring chamber (26) of the service brake cylinder (10), in which a return spring (16) supported at one end on the cylinder cover (18) and at the other end on the service brake piston (4) is accommodated.

10. The brake device as claimed in claim 9, **characterized in that** a bearing (40) for a Bowden control used to actuate the actuating lever (20) is formed on the cylinder cover (18).

11. The brake device as claimed in claim 9 or 10, **characterized in that** the at least one shaft bearing (22) is formed in a bearing cap (38), which can be inserted from the outside into a through opening (36) in the cylinder cover (18).

12. The brake device as claimed in one of the preceding claims, **characterized in that** the at least one shaft bearing (22) and the at least one support roller bearing (44) are designed as rolling contact bearings.

13. The brake device as claimed in one of the preceding claims, **characterized in that** it is designed as a brake caliper unit of a disk brake of a railway vehicle.

**Revendications**

1. Dispositif de freinage d'un véhicule sur rails comportant au moins un cylindre (10) de frein de service ayant au moins un piston (4) de frein de service actionné par un fluide comprimé, qui actionne une tige (6) de piston de frein de service coaxiale à un axe (12) de cylindre de frein, ainsi qu'un dispositif de frein de stationnement ayant un levier (20) d'actionnement monté pivotant, dont le mouvement de rotation peut être transmis à un arbre (24), qui est disposé perpendiculairement à l'axe (12) du cylindre de frein et qui est monté tournant sur un carter (18) par au moins un palier (22) d'arbre, le mouvement tournant, provoqué par le levier (20) d'actionnement de l'arbre (24), pouvant être transformé en un mouvement linéaire, dirigé parallèlement à l'axe (12) du cylindre de frein, d'au moins un galet (42) d'appui monté tournant par un palier (44) de galet d'appui sur un axe (76) de rotation disposé parallèlement à l'arbre (24) par le fait qu'il est prévu au moins une came (50) solidaire en rotation de l'arbre (24) et ayant une surface (52) efficace de came, qui, pendant une course de serrage ou de desserrage du dispositif de frein de stationnement, coopère avec une surface (54) extérieure radialement du galet (42) d'appui, le mouvement linéaire du galet (42) d'appui étant transmis à la tige (16) du piston du frein de service, **caractérisé en ce que** la surface (52) efficace de la came est constituée sous la forme d'un tronçon périphérique d'une surface de cylindre, dont l'axe (66) médian exécute, pendant une course de serrage ou de desserrage du dispositif de frein de stationnement, une trajectoire (68) circulaire autour de l'axe (70) de l'arbre (24), dans lequel il existe un point (72) d'intersection de cette trajectoire (68) avec l'axe (12) du cylindre de frein, point qui est associé sensiblement à une force de freinage de stationnement maximum.

2. Dispositif de freinage suivant la revendication 1, **caractérisé en ce que** l'arbre (24) et le au moins un galet (42) d'appui sont disposés de manière à ce que, rapporté à toute la course de serrage au début de la course de serrage, la distance (b) entre l'axe (70) de l'arbre et une ligne (78) d'application d'une force s'étendant entre une ligne (74) de contact entre la surface (52) efficace de la came et la surface (54) du galet d'appui, d'une part, et l'axe (76) du galet d'appui, d'autre part, prenne une valeur maximum.

3. Dispositif de freinage suivant l'une des revendications précédentes, **caractérisé en ce qu'**il est prévu deux cames (50) solidaires en rotation de l'arbre (24) et disposées symétriquement par rapport à l'axe (12) du cylindre de frein, ainsi que deux galets (42) d'appui coopérant avec les cames (50) et disposés symétriquement par rapport à l'axe (12) du cylindre de frein.

4. Dispositif de freinage suivant la revendication 3, **caractérisé en ce qu'**il est prévu au moins deux paliers (22) d'arbre disposés symétriquement par rapport à l'axe (12) du cylindre de frein et, considéré dans la direction perpendiculaire à l'axe du cylindre de frein, les paliers (22) d'arbre et les paliers (44) de galet d'appui sont décalés les uns par rapport aux autres.

5. Dispositif de freinage suivant la revendication 4, **caractérisé en ce que** la distance des paliers (22) d'arbre à l'axe (12) du cylindre de frein est plus grande que la distance des paliers (44) de galet d'appui à l'axe (12) du cylindre de frein.

6. Dispositif de freinage suivant l'une des revendications précédentes, **caractérisé en ce que** le au moins un galet (42) d'appui est monté tournant par un tourillon (56) de palier sur un cône (58) de serrage monté sur la tige (6) du piston de frein de service en coulissant coaxialement à l'axe (12) du cylindre de frein, le mouvement linéaire du cône (58) de serrage étant transmis à la tige (6) du piston du frein de service par une butée (60) axiale.

7. Dispositif de freinage suivant la revendication 6, **caractérisé en ce que** le cône (58) de serrage est monté coulissant coaxialement à l'axe (12) du cylindre de frein sur la tige (6) du piston de frein de service et la butée (60) est constituée sous la forme d'une surface (61) de butée convexe, considéré dans la direction de l'axe (12) du cylindre de frein, surface qui coopère avec une surface (63) annulaire disposée perpendiculairement à l'axe (12) du cylindre de frein, la surface (61) de butée convexe et la surface (63) annulaire disposée perpendiculairement à l'axe (12) du cylindre de frein étant constituées respectivement soit sur le cône (58) de serrage, soit sur la tige (6) du piston du frein de service.

8. Dispositif de freinage suivant l'une des revendications précédentes, **caractérisé en ce que** la tige (6) du piston du frein de service actionne un mécanisme de frein.

9. Dispositif de freinage suivant l'une des revendications précédentes, **caractérisé en ce que** le carter (18) portant le au moins un palier (22) d'arbre est constitué sous la forme d'un couvercle de cylindre, qui ferme axialement une chambre (26) à ressort du cylindre (10) de frein de service, dans laquelle est logé un ressort (16) de rappel s'appuyant, d'une part, sur le couvercle (18 du cylindre et, d'autre part, sur le piston (4) du frein de service.

10. dispositif de freinage suivant la revendication 9, **caractérisé en ce que**, sur le couvercle (18) du cylindre, est formé un support (40) pour un câble bowden actionnant le levier (20) d'actionnement.

11. Dispositif de freinage suivant la revendication 9 ou 10, **caractérisé en ce que** le au moins un palier (22) d'arbre est constitué en un couvercle (38) de palier pouvant être inséré de l'extérieur dans une ouverture (38) traversante du couvercle (18) du cylindre.

12. Dispositif de freinage suivant l'une des revendications précédentes, **caractérisé en ce que** le au moins un palier (22) d'arbre et le au moins un palier (4) du galet d'appui sont constitués sous la forme de paliers à roulement.

13. Dispositif de freinage suivant l'une des revendications précédentes, **caractérisé en ce qu'**il est constitué sous la forme d'une unité de pince de frein d'un frein à disque d'un véhicule sur rails.

FIG. 1

FIG. 2

FIG.3

FIG.4

FIG.5

EP 2 427 669 B1

FIG.6

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0674116 B1